(19) Europäisches Patentamt
European Patent Office
Office européen des brevets

(11) Veröffentlichungsnummer: 0 013 438
A1

(12) # EUROPÄISCHE PATENTANMELDUNG

(21) Anmeldenummer: 79105411.7

(22) Anmeldetag: 31.12.79

(51) Int. Cl.[3]: C 08 F 4/04
C 08 F 2/02, C 08 F 136/04

(30) Priorität: 11.01.79 DE 2900880

(43) Veröffentlichungstag der Anmeldung:
23.07.80 Patentblatt 80/15

(84) Benannte Vertragsstaaten:
DE FR GB IT

(71) Anmelder: BAYER AG
Zentralbereich Patente, Marken und Lizenzen
D-5090 Leverkusen 1, Bayerwerk(DE)

(72) Erfinder: Heitz, Walter, Dr.
Am Schmidtborn 5
D-3575 Kirchhain 1(DE)

(72) Erfinder: Ball, Peter, Dr.
Am Burger Wald 71
D-8267 Neu Ötting(DE)

(54) **Verfahren zur Herstellung von telechelen Dienpolymerisaten.**

(57) Verfahren zur Herstellung telecheler Polymerisate durch Substanzpolymerisation von konjugierten Dienen in Gegenwart von Azodicarbonsäureestern oder -nitrilen bis zum praktisch vollständigen Verbrauch des Initiators.

EP 0 013 438 A1

BAYER AKTIENGESELLSCHAFT
Zentralbereich
Patente, Marken und Lizenzen

5090 Leverkusen, Bayerwerk
Kb/bc

# Verfahren zur Herstellung von telechelen Dienpolymerisaten

Gegenstand der Anmeldung ist ein Verfahren zur Herstellung von Dienpolymerisaten mit 2 jeweils endständigen funktionellen Gruppen (Telechele) durch Substanzpolymerisation von konjugierten Dienen in Gegenwart von Azoverbindungen.

Polymere mit funktionellen Endgruppen sind bereits bekannt. Sie können beispielsweise hergestellt werden durch Lösungs- oder Emulsionspolymerisation von Dienen unter Verwendung von Azodicarbonsäureestern als Initiatoren (D.M. French, Rubber Chem. Technol. 42, 71 (1969)). Es ist außerdem bekannt, daß Polymerisationsreaktionen nach dem Erreichen eines maximalen Umsatzes, der von den Reaktionsparametern abhängt und über einen großen Bereich variieren kann, zum Stillstand kommen, wenn Initiatoren mit kurzen Halbwertzeiten verwendet werden und keine Beeinflussung der Polymerisation durch Gelbildung erfolgt (A.V. Tobolsky, J.Amer.Chem.Soc. 80, 5927 (1958)).



BAD ORIGINAL

Polymerisate mit endständigen Estergruppen können beispielsweise hergestellt werden durch Polymerisation von Dienen wie Butadien oder Chloropren in Gegenwart von Azodicarbonsäureestern. Durch Reduktion mit Lithiumaluminiumhydrid werden daraus Polymerisate mit endständigen Hydroxylgruppen erhalten (US-Patent 2 877 212; Journal of Polymer Science, Vol. 4, S. 1898-1901, 1966).

Im US-Patent 3 306 888 ist die Herstellung von Azodialkoholen beschrieben, die als Initiatoren verwendet werden können und direkt zu Polymerisaten mit endständigen Hydroxylgruppen führen.

Die vorerwähnten Polymerisationsverfahren werden alle in Lösung oder Emulsion durchgeführt. Die Polymerisation in Abwesenheit von Lösungs- oder Verdünnungsmitteln (Substanzpolymerisation) ist im allgemeinen wegen der Schwierigkeiten bei der Abführung der Polymerisationswärme nur schwer zu beherrschen. Diese Schwierigkeiten sind insbesondere auch bei der Herstellung von Telechelen zu erwarten, da hier mit hohen Initiatorkonzentrationen gearbeitet werden muß.

Es wurde nun gefunden, daß Dienpolymerisate mit funktionellen Endgruppen durch Substanzpolymerisation hergestellt werden können, wenn die Gesamtmenge des zu polymerisierenden Diens und des Initiators vorgelegt werden, und die Polymerisation bis zum praktisch vollständigen Verbrauch des Initiators durchgeführt wird. Das erfindungsgemäße Verfahren hat den Vorteil, daß unter diesen Bedingungen nur relativ niedrige Umsätze von $< 60$ Gew.-% der Monomeren erreicht werden, wodurch das Reaktionsmedium sehr niedrigviskos bleibt und somit eine effektive Kühlung möglich ist. Vorzugsweise liegt der Monomerenumsatz bei 10-50 Gew.-%.

Gegenstand der Erfindung ist ein Verfahren zur Herstellung telecheler Dienpolymerisate durch Polymerisation von konjugierten Dienen in Gegenwart von Azoverbindungen als Initiatoren, dadurch gekennzeichnet, daß man

a) als Azoverbindungen Azodicarbonsäureester oder Azodicarbonsäurenitrile in Mengen von 1 bis 20 Gew.-%, bezogen auf eingesetztes Dien, verwendet;

b) vor Beginn der Polymerisation eine Mischung aus der Gesamtmenge des Diens und der Azoverbindung herstellt, und

c) die Polymerisation in Substanz bei einer Temperatur von 50 bis 150°C unter dem Eigendruck des Systems bis zum praktisch vollständigen Verbrauch der Azoverbindung durchführt.

Als Initiatoren geeignet sind Azoverbindungen der Formel (1)

$$X-\overset{R'}{\underset{R}{C}}-N=N-\overset{R'}{\underset{R}{C}}-X \qquad (1)$$

in der

X -CN oder $-CO_2R$ ist, und

R einen Alkylrest mit 1 bis 4 Kohlenstoffatomen bedeutet und

R' = R oder $-(CH_2)_n-OH$ mit n = 2 - 6 ist.



BAD ORIGINAL

Vorzugsweise werden als Initiatoren Azobisisobuttersäuremethylester und -ethylester verwendet.

Geeignete Monomere sind konjugierte, gegebenenfalls halogensubstituierte Diene mit 4 bis 8 Kohlenstoffatomen wie Butadien, Isopren, Dimethylbutadien und Chloropren. Bevorzugtes Monomer ist Butadien.

Das erfindungsgemäße Verfahren hat den Vorteil, daß die telechelen Polymerisate in hoher Reinheit anfallen, da außer Monomeren und Initiator keine anderen Substanzen wie z. B. Lösungsmittel eingesetzt werden. Ein weiterer wesentlicher Vorteil des Verfahrens liegt darin, daß eine große Effektivität des Initiators erreicht ($f \approx 0,9$) und ein hoher Prozentsatz der Initiatorbruchstücke in das Polymere eingebaut wird. Darüber hinaus kann bei Anwendung eines Temperaturprogramms durch geeignete Änderung der Reaktionstemperatur der Quotient aus Wachstumsgeschwindigkeit und Initiierungsgeschwindigkeit konstant gehalten und eine enge Molekulargewichtsverteilung des Polymerisats erzielt werden.

Die erfindungsgemäß hergestellten Polymerisate haben Molgewichte von 300 bis 20 000, vorzugsweise von 500 bis 15 000. Sie können durch geeignete Umsetzungen ihrer funktionellen Endgruppen zum Aufbau höhermolekularer Polymerisate verwendet werden. Bei Polymeren mit Esterendgruppen kann dies beispielsweise durch Polykondensation mit Diolen erfolgen. Ebenso ist eine Copolykondensation mit anderen Diestern, beispielsweise mit Dimethylterephthalat, möglich. Die erfindungsgemäß hergestellten

Polymerisate mit Esterendgruppen können zunächst auch durch katalytische Hydrierung in gesättigte Polymere mit endständigen aliphatischen Estergruppen überführt werden. Diese hydrierten Produkte können bei wesentlich höheren Temperaturen für Polykondensationen eingesetzt werden als die nicht-hydrierten Produkte.

Die folgenden Beispiele erläutern die Erfindung.

## Beispiele

### Beispiel 1

Polymerisation

Zu 14 g Azobisisobuttersäuremethylester werden - unter Stickstoff-Atmosphäre - 325 g 1,3-Butadien gegeben. Die Reaktionsmischung wird unter Rühren 14 bis 16 Stunden bei 80°C gehalten, wobei die Polymerisation unter dem Eigendruck des Systems (ca. 12 bar) abläuft. Danach wird das überschüssige Butadien abdestilliert. Restliches Butadien sowie Tetramethylbernsteinsäuredimethylester, der als Nebenprodukt entstanden ist, werden während 6 Stunden am Rotationsverdampfer bei < 0,1 mbar und einer Badtemperatur von 90°C entfernt. Es bleiben 114 g eines glasklaren flüssigen Produkts mit $M_n$ = 2000 zurück.

### Beispiel 2

Hydrierung

50 g des Produktes nach Beispiel 1 werden in 300 ml Dioxan gelöst und mit 3 g Hydrierungskatalysator (10 % Pd auf Aktivkohle) während 12 Stunden bei 70 bar hydriert. Dabei wird der Katalysator in 3 Portionen zu Beginn, nach 2 Stunden und nach 5 Stunden zugegeben, um eine Verminderung der Aktivität durch ausfallendes hydriertes Produkt zu vermeiden. Danach wird das Dioxan entfernt und das Produkt mit siedendem Xylol aus dem Rückstand ausgewaschen.

Nach Abdampfen des Xylols erhält man das hydrierte Produkt als relativ weiches weißes Wachs.

Beispiel 3

Polykondensation

Die Produkte nach Beispiel 1 und Beispiel 2 können mit Diolen nach den üblichen Verfahren homopolykondensiert werden, wobei ungesättigte Produkte gemäß Beispiel 1 bei Temperaturen $\leq 250^{o}C$ auskondensiert werden. Eine solche Homopolykondensation des o.g. Produktes ($M_n$ = 2000) mit Butandiol liefert einen Polyester mit $M_n = 1,5 \cdot 10^5$.

Beispiel 4

Analog Beispiel 1 werden 12 g Azobisisobuttersäuremethylester mit 268 g Isopren polymerisiert. Man erhält 90 g eines glasklaren, flüssigen Produkts mit $M_n$ = 2050.

Beispiel 5

Analog Beispiel 1 werden 4 g Azobisisobuttersäuremethylester mit 284 g Isopren umgesetzt. Man erhält 49,3 g eines glasklaren, flüssigen Produkts mit $M_n$ = 2900.

Beispiel 6

Analog Beispiel 1 werden 14 g Azobisisobuttersäuremethylester mit 124 g Isopren umgesetzt. Man erhält 73,9 g eines glasklaren, flüssigen Produkts mit $M_n$ = 1315.

Beispiel 7

Analog Beispiel 1 werden 10 g Azobisisobuttersäuremethylester mit 155 g 2,3-Dimethylbutadien umgesetzt. Man erhält 67,6 g eines farblosen, flüssigen Produkts mit $M_n$ = 1470, das beim Erkalten weißlich trübe wird.

## Patentansprüche

1. Verfahren zur Herstellung telecheler Dienpolymerisate durch Polymerisation von konjugierten Dienen in Gegenwart von Azoverbindungen als Initiatoren, dadurch gekennzeichnet, daß man

   a) als Azoverbindungen Azodicarbonsäureester oder Azodicarbonsäurenitrile in Mengen von 1 bis 20 Gew.-%, bezogen auf eingesetztes Dien, verwendet,

   b) vor Beginn der Polymerisation eine Mischung aus der Gesamtmenge des Diens und der Azoverbindung herstellt, und

   c) die Polymerisation in Substanz bei einer Temperatur von 50 bis 150°C unter dem Eigendruck des Systems bis zum praktisch vollständigen Verbrauch der Azoverbindung durchführt.

2. Verfahren nach Anspruch 1, dadurch gekennzeichnet, daß die Polymerisation unter Anwendung eines Temperaturprogramms durchgeführt und eine enge Molekulargewichtsverteilung des Polymerisats eingestellt wird.

0013438

Europäisches Patentamt

# EUROPÄISCHER RECHERCHENBERICHT

Nummer der Anmeldung
EP 79 10 5411

| EINSCHLÄGIGE DOKUMENTE | | | KLASSIFIKATION DER ANMELDUNG (Int.Cl.) |
|---|---|---|---|
| Kategorie | Kennzeichnung des Dokuments mit Angabe, soweit erforderlich, der maßgeblichen Teile | betrifft Anspruch | |
| X | JOURNAL OF POLYMER SCIENCE, Band 46, Nr. 148, 1960, Seiten 431-440 Interscience Publishers, Inc., R.H. GOBRAN et al.: "Bulk polymerization of Isoprene: Kinetic Constants from the dead-end theory" * Seite 440 * | 1 | C 08 F 4/04<br>2/02<br>136/04 |
| D,A | RUBBER CHEMISTRY AND TECHNOLOGY, Band 42, Nr. 1, 1969, Seiten 71-109, Rubber Division of the American Chemical Society, Inc. D.M. FRENCH: "Functionally terminated butadiene polymers" * Seiten 76-83 * | | RECHERCHIERTE SACHGEBIETE (Int. Cl.)<br>C 08 F 4/04<br>2/02<br>36/04<br>136/04 |

KATEGORIE DER GENANNTEN DOKUMENTE
- X: von besonderer Bedeutung
- A: technologischer Hintergrund
- O: nichtschriftliche Offenbarung
- P: Zwischenliteratur
- T: der Erfindung zugrunde liegende Theorien oder Grundsätze
- E: kollidierende Anmeldung
- D: in der Anmeldung angeführtes Dokument
- L: aus andern Gründen angeführtes Dokument
- &: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 03-04-1980 | V. HUMBEECK |